# EUROPEAN PATENT APPLICATION

(11) **EP 2 378 419 A2**
(43) Date of publication of application: **19.10.2011**
(21) Application number: 11161206.5
(22) Date of filing: 05.04.2011
(51) Int. Cl.: G06F 9/445

(54) **System and method for fast boot of computer**

(30) Priority: 13.04.2010 US 759160
(71) Applicant: Sony Corporation, Tokyo 108-0075 (JP)
(72) Inventor: Nguyen, Hien, San Diego, CA 92127-1898 (US); Zhou, Yi, San Diego, CA 92127-1898 (US)
(74) Representative: Scaddan, Gareth Casey

(57) **Abstract**

A user can select an instant on power key to cause a computer to quickly boot an instant on O.S. with greater capability than previously afforded for fast boot. The instant on O.S. can access the "C" drive and the user can choose the image for a home icon of a UI. The UI can present icons of function categories in a sequence determined by the frequency with which the user selects the categories. One click file sharing is provided, as is secure login in the instant on mode, if the user so desires.

## Description

### Field of the Invention

The present application is directed to systems and methods for fast boots of computers.

### Background of the Invention

Recognizing that circumstances arise when computer users may wish to invoke only a limited number of options available in a computer's main operating system (O.S.), present principles understand that so-called "instant on" computers can enable a user to select a normal boot, in which the main, full-capability O.S. is booted, or an "instant on" boot, in which a less capable but faster booting O.S. is booted more quickly than the main O.S. can be booted. Thus, for instance, anticipating that a user with a small computer might wish to only surf the Internet in a social setting such as a coffee shop, the less capable O.S. might be configured only to provide browsing functionality, facilitating a conveniently more rapid boot by dispensing with booting the main O.S. providing other functionalities.

As understood herein, however, many users of an instant on feature might prefer functionalities currently provided only by the main O.S., but without incurring the lengthy boot time of invoking the main O.S. Furthermore, an instant on O.S. might not fully anticipate a user's needs even when surfing the Internet, so that, for example, a user wishing to file share in a social setting typically cannot do so because instant on O.S. typically do not have access to the "C" drive (hard disk drive) of the computer. With these and other recognitions in mind, present principles are provided.

### Summary of the Invention

Various respective aspects and features of the invention are defined in the appended claims. Combinations of features from the dependent claims may be combined with features of the independent claims as appropriate and not merely as explicitly set out in the claims.

In one embodiment, computer includes a housing holding a processor and a computer display controlled by the processor. A disk drive is in the housing and a solid state memory also is in the housing. At least first and second power on selector elements can be disposed on the housing to energize the computer. Responsive to a signal from the first selector element the processor boots a main operating system (O.S.) from the disk drive into the memory and responsive to a signal from the second selector element the processor boots a second O.S. having a faster boot time than the main O.S. In this embodiment, the processor executing the second O.S. can access the disk drive.

Also, the processor presents a user interface (UI) on the display presenting a line (row or column) of icons representing categories. The row includes a home icon, and the processor enables a user to select an image and responsive thereto the processor presents the image as the home icon to thereby establish the appearance of the home icon. Furthermore, the processor determines a number of times a user selects each category within a count period, ordering the icons in the row (or column) according to the number of times a user has selected the corresponding categories. Also, the processor establishes file sharing with another computer responsive to one and only one input action indicating a desire to share files. The processor may also provide secure login responsive to a user selection thereof.

In some examples, the categories include wireless, social networking, settings, configurable applications, gaming, and media gallery. The wireless category can be selected to enable a user to configure wireless local area network (WLAN) settings, wireless wide area network (WWAN) settings, and short range rf communication settings. On the other hand, the social networking category can be entered to launch an email application, a short message service application, and a social networking website application. In contrast, the settings category can be entered to allow a user to enter date and time and to define at least a human language in which information is presented on the display. The configurable application category can be entered to allow a user to enter a weather website, a stock quote website, a calendar function, and to define and invoke a one-click file sharing user-defined function (UDF). The gaming category can be entered to allow a user to select to launch a web-based gaming application and a network gaming application, and the media gallery category can be selected to cause photographic galleries to be accessible to the user.

In non-limiting examples the image for the home icon is established at least in part by receiving a user selection of "stored image" or "camera", and responsive to "stored image" being selected, the processor presents a list of stored images one of which is selectable by the user to establish the home icon. In contrast, responsive to "camera" being selected the processor obtains a current image from a camera on the computer and uses the image from the camera to establish the home icon.

In some implementations the processor is enabled to access the disk drive while executing the second O.S. by mounting the disk drive or a partition thereof during boot and linking the disk drive or partition to a predefined directory accessed by the processor executing the second O.S. If desired, the processor may present a UI upon first time power on using the second selector element prompting a user to select whether to invoke secure login. Responsive to a user input indicating desire to invoke secure login, the processor can prompt the user to select an unlock signal. The computer prevents use of the computer upon subsequent power-ons using the second selector element until the unlock signal is received. For example, the user can select a hot key or a fingerprint reader (FPR) signal as the unlock signal.

As set forth further below, example implementations may include, responsive to receiving a one-click file sharing signal, presenting a UI on the display configured to receive a user-input folder name, password option, password, and access options. The processor loads the folder name, password option, password, and access options into a user-defined function (UDF) and executes the UDF upon subsequent receptions of the one-click file sharing signal such that the user can share files with another computer using one and only input action.

Furthermore, the processor may be programmed to determine a number of times a user selects each category within a count period, ordering the icons in the row or column according to the number of times a user has selected the corresponding categories such that icons representing more frequently selected categories are nearer to one end of the row than icons representing less frequently selected categories.

In another embodiment, a computer includes a housing holding a processor and a computer display controlled by the processor. A disk drive is in the housing and a solid state memory also is in the housing. The processor presents a user interface (UI) on the display presenting a row of icons representing categories. The processor determines a number of times a user selects each category within a count period and orders the icons in the row or column according to the number of times a user has selected the corresponding categories, such that icons representing more frequently selected categories are nearer to one end of the row than icons representing less frequently selected categories.

In another embodiment, a computer includes a housing holding a processor and a computer display controlled by the processor. A disk drive is in the housing and a solid state memory also is in the housing. Responsive to receiving a one-click file sharing signal, the processor presents a UI on the display configured to receive a user-input folder name, password option, password, and access options. The processor loads the folder name, password option, password, and access options into a user-defined function (UDF) and then executes the UDF upon subsequent receptions of the one-click file sharing signal such that the user can share files with another computer using one and only input action such as a mouse click on a file sharing selector element of the UI.

### Brief Description of the Drawings

Embodiments of the invention will now be described with reference to the accompanying drawings, throughout which like parts are referred to by like references, and in which:
Figure 1 is a perspective view of an example computer in accordance with present principles, schematically showing various internal components;
Figures 2-8 are example screen shots of the main "instant on" operating system user interface (UI) with respective categories selected;
Figure 9 is a flow chart showing example logic for allowing a user to select a "home" image;
Figure 10 is a flow chart showing example logic for ordering categories in the main UI according to frequency of selection by the user;
Figure 11 is a flow chart showing example logic for implementing a one-click file sharing user-defined function (UDF);
Figure 12 is a flow chart showing example logic for allowing a user to select whether and how to implement secure login in the instant on mode; and
Figure 13 is a flow chart showing example non-limiting logic for making the "C" drive (HDD) of the computer available during an instant on login session.

### Description of the Example Embodiment

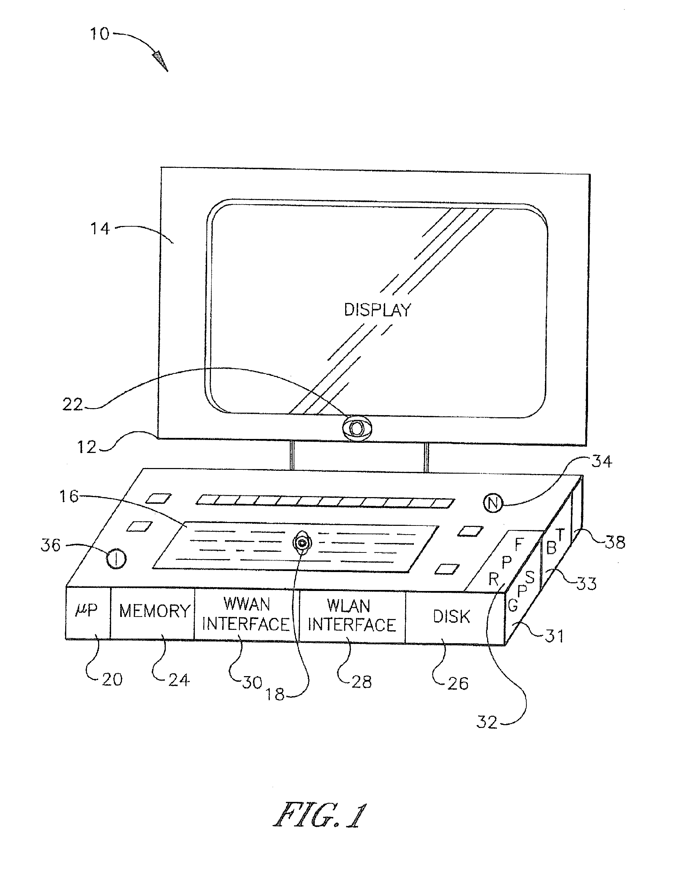

Referring initially to Figure 1, a computer is shown, generally designated 10, that includes a housing 12 supporting an output device such as a visual display 14 and an input device such as a keyboard 16 with joystick 18. The visual display 14, which can be a touchscreen including multi-touch, is controlled by one or more processors 20 in the housing 12, with the processor 20 receiving input signals from the input devices. The processor 20 may also receive image signals from a camera 22 mounted on the housing 12. The processor 20 typically accesses various tangible computer readable storage media such as a memory 24 that may be implemented by solid state memory. The processor 20 may also access optical and/or magnetic disk-based storage 26. In some implementations, the processor 20 communicates with a wireless local area network (WLAN) using a WLAN interface 28 such as an IEEE 802.11 interface, e.g., a WiFi interface, and/or a Bluetooth interface. The processor 20 may also communicate with the Internet using a wireless wide area network (WWAN) interface 30 such as but not limited to a code division multiple access (CDMA) interface, a time division multiple access (TDMA) interface, a Global Systems for Communication (GSM) interface, a space division multiple access (SDMA) interface, and orthogonal frequency division multiplex OFDM) interface, a frequency division multiple access (FDMA) interface, a long term evolution (LTE) interface, a universal mobile telecommunications system (UMTS) interface, etc. A global positioning satellite (GPS) receiver can be provided on the housing 12 to receive geographic position information from satellites and provide that information to the processor 20. A fingerprint reader (FPR) 32 may also tactilely or optically sense a person's fingerprint and send a signal representative thereof to the processor 20. In some embodiments a Bluetooth transceiver 33 is also provided to enable the computer 10 to communicate using Bluetooth.

Without limitation, the computer 10 may be a notebook computer, laptop computer, personal digital assistant, personal computer, all-in-one computer, television, etc.

As shown in Figure 1, the example computer 10 can include a normal boot key 34 and a quick boot (or "instant on") boot key 36. To energize the internal components of the computer typically from one or more DC batteries 38 and/or an AC-DC adapter, a user may manipulate either key 34, 36. When the normal boot key 34 is manipulated, the computer 10 is energized and a normal or full capability O.S. resident on disk 26 is booted into memory 24. On the other hand, when the quick boot key 36 is manipulated, the computer 10 is energized and a less capable, smaller, limited use "instant on" O.S. which may be permanently stored on memory or which may be stored in disk 26 is quickly booted into operation in memory 24. In this way, the user is not forced to wait as long as he would to begin use of the computer 10 were the normal boot key 34 used.

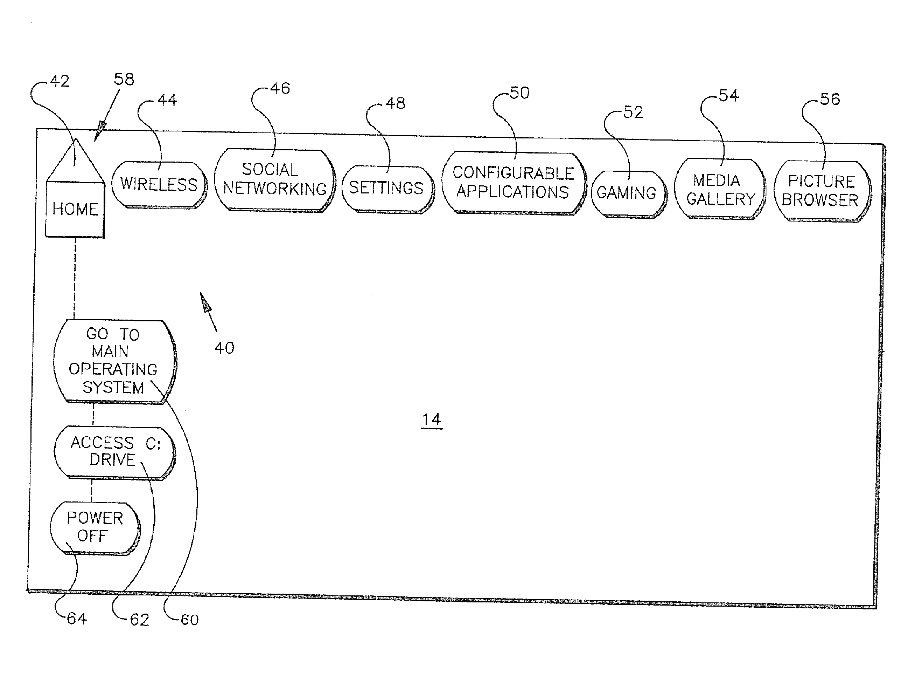

Figure 2 shows a user interface (UI) 40 that can be presented on the display 14 by the processor 20 executing the instant on O.S. immediately following power-on using the quick boot key 36. As shown, the UI 40 is patterned as a cross-media bar (XMB) provided by Sony Corp., it being understood that "XMB" is a trademark of Sony Corp. The UI 40 has a horizontal row of icons representing respective functionality categories, including a "home" icon 42, a "wireless setup" icon 44, a "social networking" icon 46, a "configurable applications" icon 50, a "gaming" icon 52, a "media gallery" icon 54, and a "picture browser" icon 56. As discussed further below, in some examples the order in which the category icons appear in the row can change in accordance with user selection frequency.

A vertical column of sub-icons may be presented under a highlighted category icon when the screen cursor is hovered over the category icon. Thus, as shown in Figure 2, when the screen cursor 58 is positioned over the home icon 42, a column of sub-icons is presented beneath the home icon 42. The "home" sub-icons may include a "go to main O.S." sub-icon 60, selection of which shuts down the computer in instant on mode and causes it to reboot the normal O.S. from disk, an "access C: drive" sub-icon 62, selection of which is described further below, and a "power off' sub-icon 64 to deenergize the computer when selected.

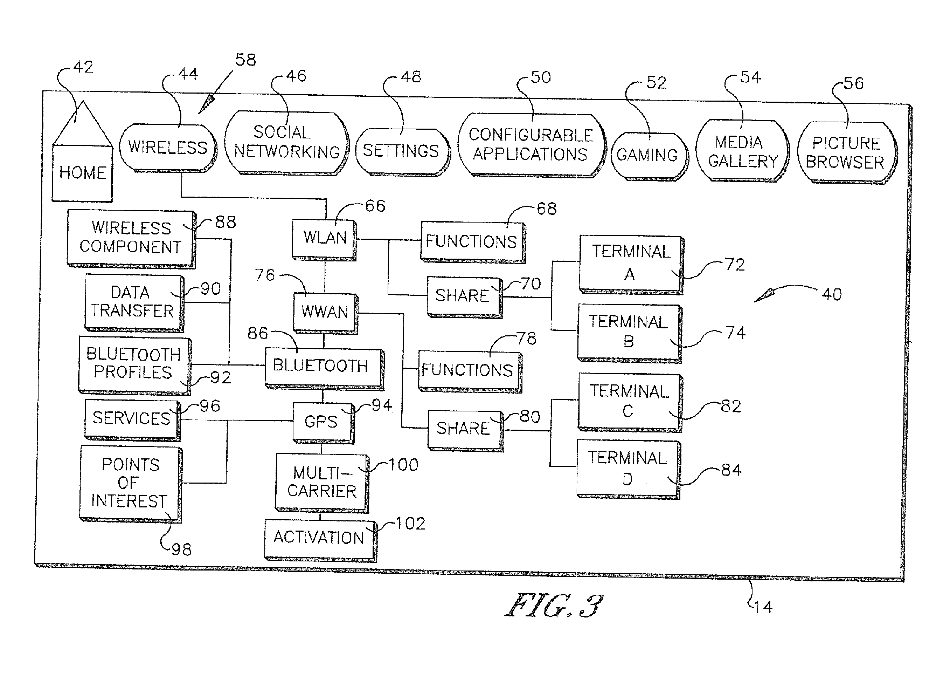

Figures 3-8 show the UI 40 with respective categories selected other than the home category discussed above. In Figure 3, the cursor 58 is positioned to highlight the "wireless" category icon 44 as shown. When highlighted, various sub-icons appear under the wireless icon 44 and some of the sub-icons themselves when selected in turn cause further sub-sub-icons to appear.

With more specificity, when the wireless icon 44 is selected, a wireless local area network (WLAN) sub-icon 66 appears enable WLAN communication to commence immediately through the WLAN interface shown in Figure 1. When this sub-icon is selected, a "functions" sub-sub-icon 68 appears which may be selected to set up various WLAN functionalities. Also, a sub-sub-icon 70 may appear which may be selected to enable a user to select file sharing over a WLAN using the WLAN interface shown in Figure 1 with one or more target terminals such as a friend's PDA, telephone or computer. In Figure 3 icons 72, 74 representing, by way of non-limiting example, two such target terminals are shown. The target terminals may be automatically detected using WLAN detection principles or preprogrammed by the user.

Also, a wireless wide area network (WWAN) sub-icon 76 can appear when the "wireless" icon 44 is selected to enable WWAN communication to commence immediately through the WWAN interface shown in Figure 1. Similar to the WLAN sub-icon 66, when the WWAN sub-icon 76 is selected a "functions" sub-sub-icon 78 appears which may be selected to set up various WWAN functionalities. Also, a sub-sub-icon 80 may appear which may be selected to enable a user to select file sharing over a WWAN using the WWAN interface shown in Figure 1 with one or more target terminals such as a friend's PDA, telephone or computer. In Figure 3 icons 82, 84 representing two such target terminals are shown. The target terminals may be automatically detected using WWAN detection principles or preprogrammed by the user.

When the "wireless" category icon 44 is selected a short range rf communication icon such as a Bluetooth sub-icon 86 may also appear as shown. When this sub-icon is selected, Bluetooth communication is established immediately using the Bluetooth transceiver 33 shown in Figure 1 and furthermore one or more wireless component icons 88 may appear. For example, while only one wireless component icon 88 is shown, a wireless mouse icon may appear and can be selected to invoke wireless mouse functionality in the Bluetooth application, i.e., to commence communication between the processor 20 and a wireless mouse using Bluetooth. A wireless headset icon may also be presented to enable Bluetooth communication with a wireless audio headset to commence.

Further sub-sub-icons associated with the Bluetooth sub-icon 86 may include a high speed data transfer icon 90 which, when selected, enables high speed Bluetooth data transfer to occur between the computer 10 and a target computer that may be selected from another category as explained further below. Also, a Bluetooth profiles icon 92 may appear to enable a user to establish one or more Bluetooth profiles.

In addition to the WLAN sub-icon 66, WWAN sub-icon 76, and Bluetooth sub-icon 86, a global positioning satellite (GPS) sub-icon 94 may appear when the wireless icon 44 is selected. When the GPS sub-icon 94 is selected, a location-based services sub-sub-icon 96 may be presented that can be clicked on by a user to invoke an application to present a menu of services available to the computer 10 user based on its geographic location as received by the GPS receiver 31 shown in Figure 1. Also, a points of interest sub-sub-icon 98 can appear, selection of which causes a presentation of points of interest nearby the position of the computer 10. Additional icons that may be associated with the GPS sub-icon 94 include a proximity targeted advertising icon, selection of which can cause the computer 10 to present advertisements received by, e.g., the WLAN or WWAN interface and keyed to the current location of the computer 10, which can be automatically uploaded using one of the above-described interfaces to an advertising server to support downloading of location-based advertisements to the computer. Also, an icon may be provided which if selected presents alerts to the user of nearby disasters or road closures, again based on the uploaded GPS position of the computer to, e.g., an alerts website.

In addition to the above sub-icons associated with the wireless icon 44, a multicarrier support sub-icon 100 and WWAN activation sub-icon 102 can be presented. Each enables the user to select a wireless carrier for providing, respectively, telephone and WWAN service by, e.g., presenting sub-sub-icons each representing a wireless carrier selectable by the user.

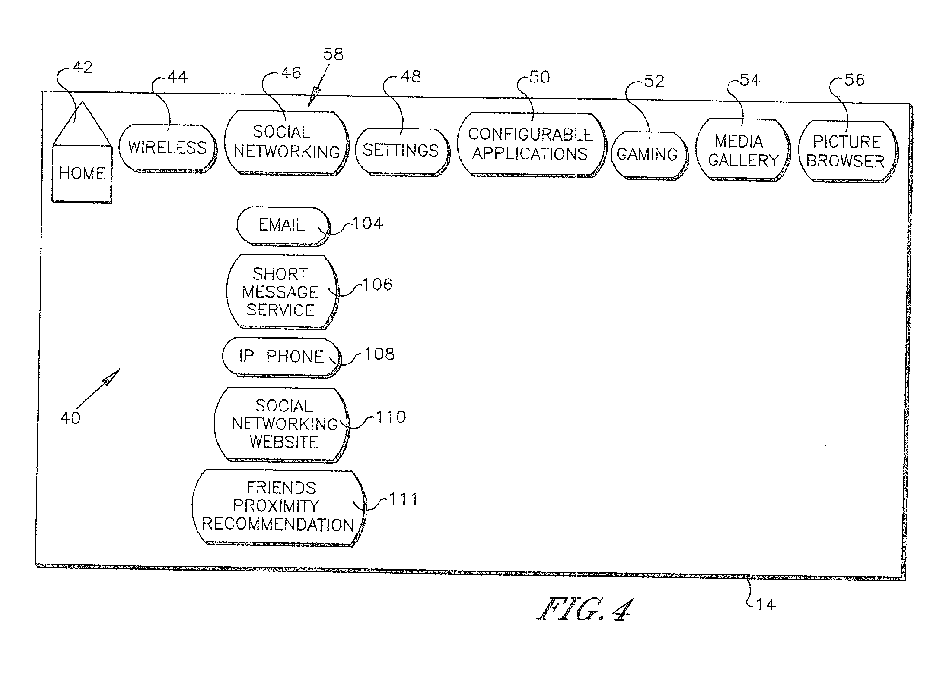

Figure 4 shows that when the social networking icon 46 is selected a column of sub-icons 104-111 is presented to respectively enable a user, by selecting one of the sub-icons, to launch an email program, a short message service (SMS) program, an IP phone program, a social networking website access program (i.e., a browser programmed to display a web page from one or more social networking websites), and a friends proximity recommendation program. The latter program may be invoked to receive, via any of the communication interfaces shown in Figure 1, recommendations from friends that are nearby the computer as indicated by, e.g., the uploaded GPS position information mentioned previously.

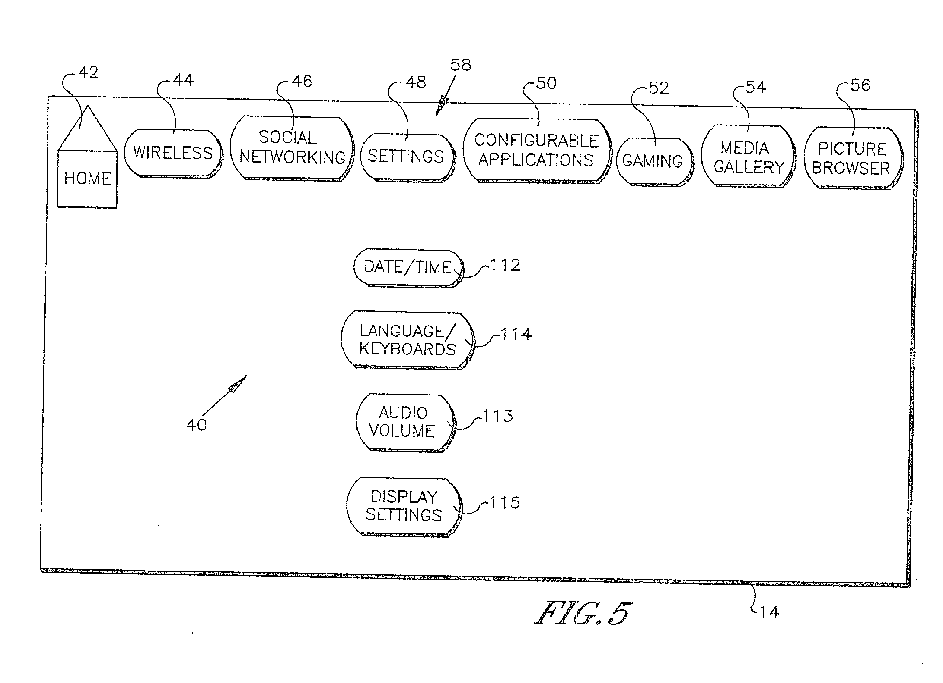

Figure 5 shows that when the settings icon 48 is selected a column of sub-icons 112, 114 is presented to respectively enable a user, by selecting one of the sub-icons, to set the current date and time (i.e., a date/time UI is presented prompting the user to enter the date and time when the sub-icon 112 is selected) and to define the language and key functionality of the keyboard 16. Thus, when the sub-icon 114 is selected a UI is presented that prompts a user to select a language from, e.g., a drop-down menu, and to select a keyboard key functionality combination again from, e.g., a drop-down menu. Also, an audio settings icon 113 may be displayed that can be selected to adjust audio settings such as volume, base, treble, etc. while a video settings icon 115 may be displayed that can be selected to adjust video settings such as brightness, contrast, etc.

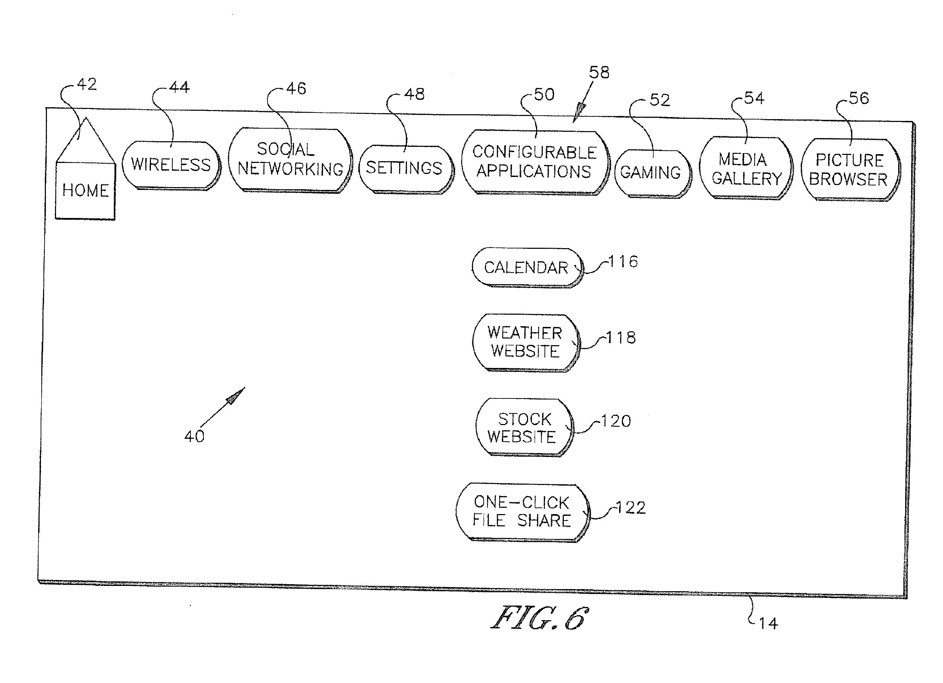

Figure 6 shows that when the configurable application icon 50 is selected a column of sub-icons 116-122 is presented to respectively enable a user, by selecting one of the sub-icons, to select to present a calendar or to launch a browser to display the web page of a weather website or stock quote website. When the sub-icon 122 is selected, one-click file sharing is enabled in accordance with disclosure further below.

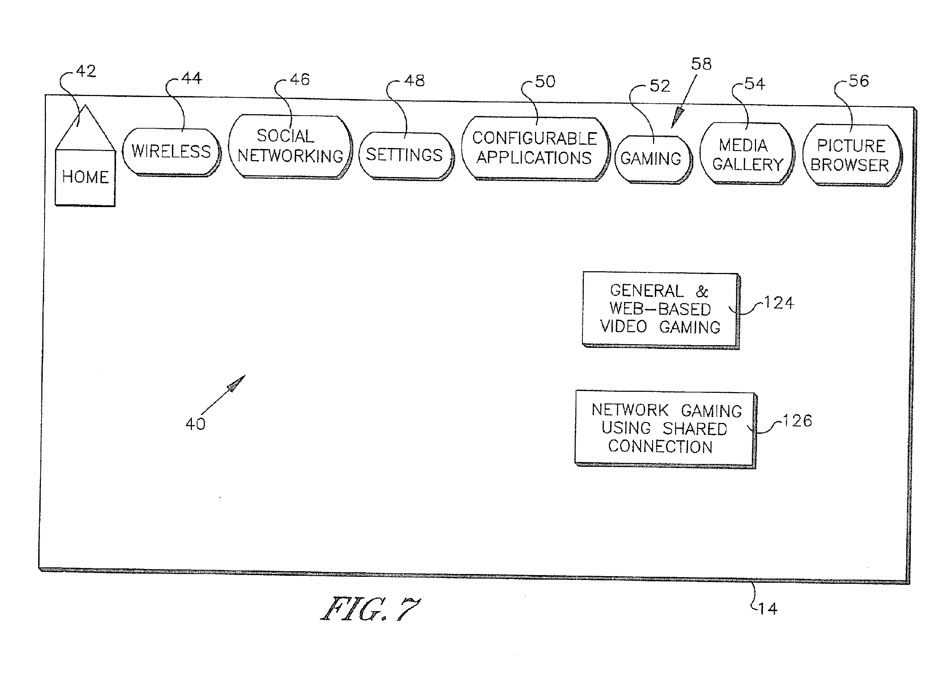

Figure 7 shows that when the gaming icon 52 is selected a column of sub-icons 124, 126 is presented to respectively enable a user, by selecting one of the sub-icons, to launch a general and web-based gaming program, and to launch a network-based gaming application using a shared connection.

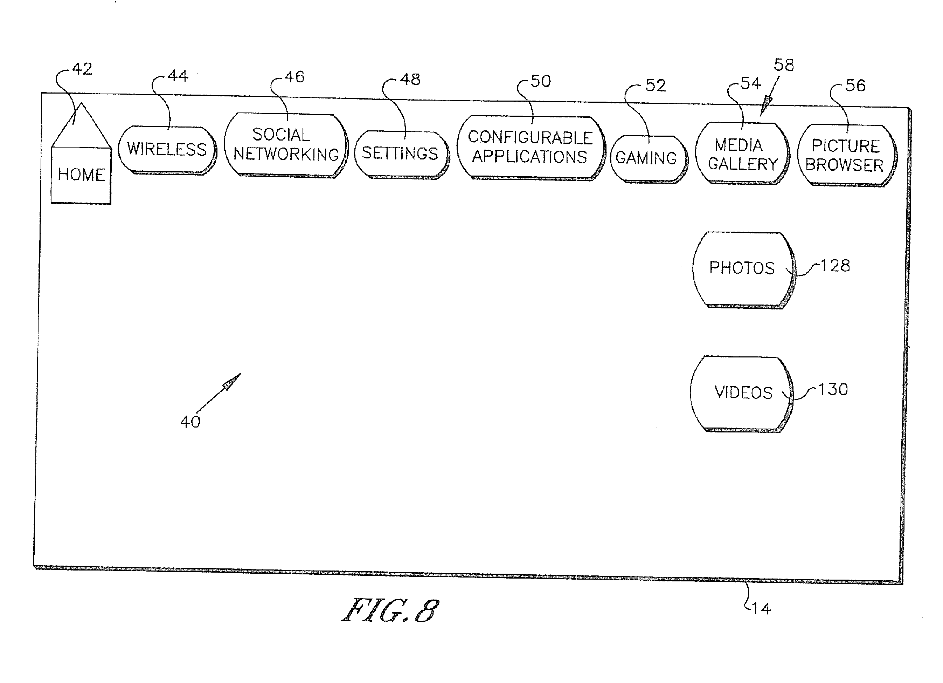

Figure 8 shows that when the media gallery icon 54 is selected a column of sub-icons 128, 130 is presented to respectively enable a user, by selecting one of the sub-icons, to present a photograph gallery and a video gallery. Other galleries and sub-galleries may be provided.

It is to be understood that all of the icons discussed above under the "wireless" icon 44 may appear at once or only when their respective next higher order icon is selected.

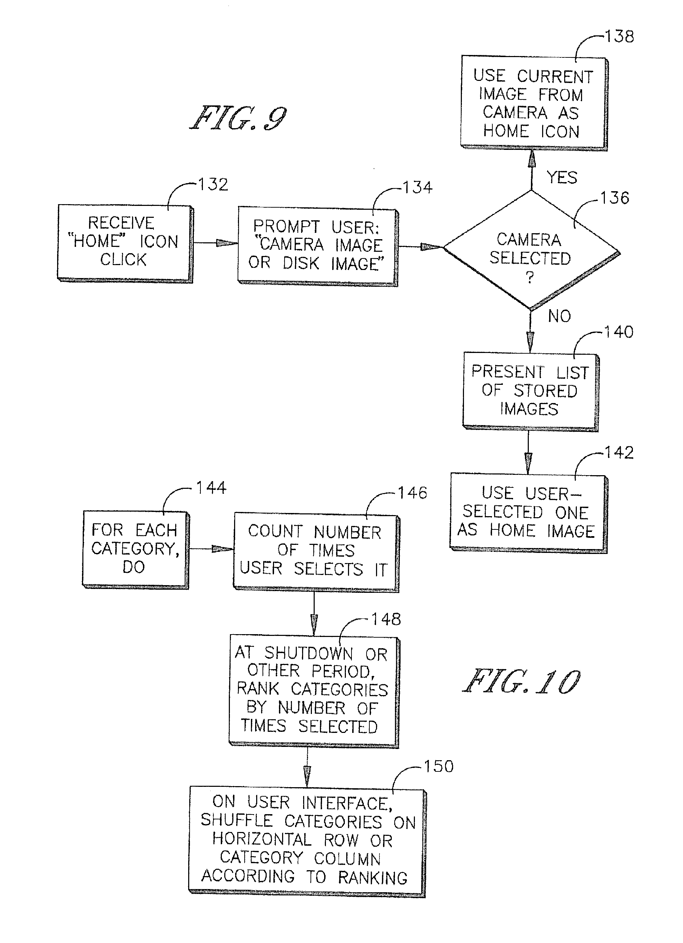

Figure 9 shows example logic for enabling a user to select the image for the home icon 42 shown in Figure 2. Commencing at block 132, a user's selection on the home icon is received. Proceeding to block 134 the user may be prompted to select a "current camera image" or "disk image". If camera is selected at decision diamond 136 the camera 22 in Figure 1 is activated and its current image as sent to the processor 20 is used at block 138 as the new home icon image, which then appears as the home icon 42 shown in Figure 2.

On the other hand, if "disk image" is selected as determined at decision diamond 136, the logic moves to block 140 to present on the display 14 a list or directory of image thumbnails representing images stored in the computer 10. A user may click on an entry in the list and at block 142 the selection of the user is used as the new home icon image, which then appears as the home icon 42 shown in Figure 2.

Figure 10 shows that the order in which the category icons 44-56 appear in the horizontal row shown in Figure 2 can be dynamically established in response to user frequency of category selection. It is preferred but not required that the home icon 42 remain the left-most icon in the row. The order shown in Figures 2-8 may be a default order that can change beginning at block 144, in which for each category, the processor 20 maintains at block 146 a count of how many times that category was selected. If desired, only the number of times the main category icon was selected is counted. In other embodiments each selection of a category icon and each selection of any sub-icon or other icon pertaining to that category is counted once, so that if a user selects a category icon, then a sub-icon in that category, then a sub-sub-icon pertaining to the selected sub-icon, the count would be "1" for that category in the former case and "3" in the latter case.

As the user uses the computer the counts for each category are maintained and incremented responsive to user selections in accordance with above principles. At block 148, at shutdown or other period, e.g., every few minutes, the categories are ranked by their counts, and then at block 150 are sorted on the horizontal row or category column in accordance with their counts. In one embodiment the icon of the category with the highest counts is positioned just to the right of the home icon, then the icon of the category with the next highest count to the right of that, and so on. Or, the category icons may be sorted from right to left, highest count to lowest. In any case, if, for instance, the settings category received 20 counts in the count period, the wireless category received 18 counts in the count period, the configurable applications category received 16 counts in the count period, the gaming category received 14 counts in the count period, the media gallery category received 12 counts in the count period, the social networking category received 10 counts in the count period, the picture browse category received 8 counts in the count period, and the media gallery category received 0 counts in the count period, then the new icon order from left to right beginning just to the right of the home icon 42 would be icon 48, icon 44, icon 50, icon 52, icon 54, icon 46, icon 56, icon 54. The count may be cumulative over all count periods or may reset at the end of each count period.

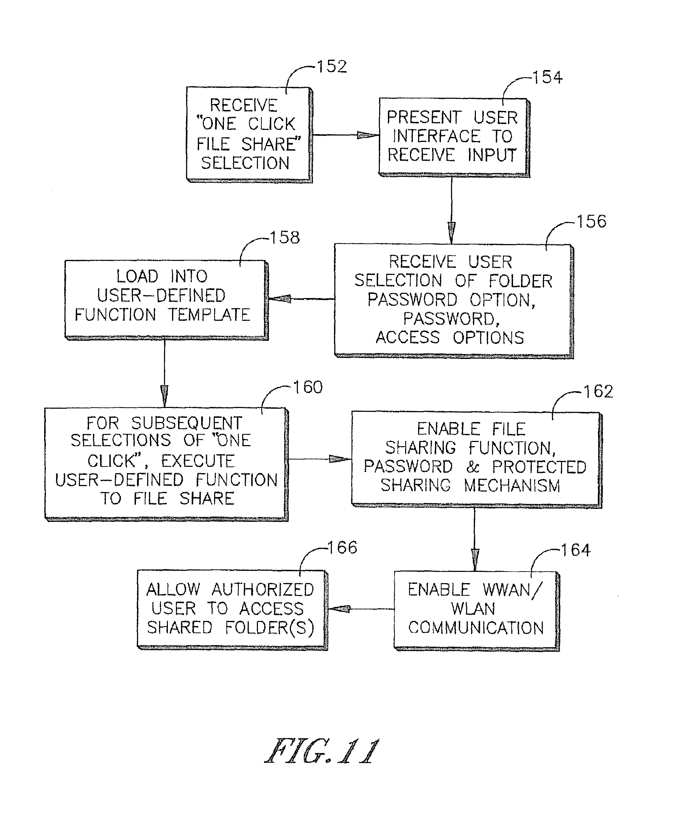

Figure 11 shows how to set up and implement the one click file sharing discussed above. When the user selects the one click icon 122 in Figure 6 for the first time, at block 152 the selection is received by the processor 20, causing it to present a UI on the display 14 at block 154 configured to receive user input. Specifically, using the UI the user identifies folder(s) to be shared, password option (i.e., whether password protection is required or not and if required, what the password is), and access options, e.g., whether file sharing will be by Bluetooth, WLAN, WWAN, etc. These selections are received at block 156 and loaded into an executable user-defined function (UDF) at block 158.

Block 160 indicates that for subsequent selections of the one-click icon 122, the UDF constructed at block 158 is executed. Typically, if password protection has been defined at block 156 the user will have conveyed the correct password to authorized target users.

At block 162 the file sharing application is automatically launched without further interaction and the following steps are also performed by the processor 20 without further user interaction. The password protection and sharing mechanism (if the user elected to invoke password protection at block 156) are instantiated at block 162, and the appropriate communication (WWAN, WLAN, etc. as defined by the user at block 156) enabled at block 164. At block 166 an authorized target user is given access to the shared folders designated at block 156, assuming the target user conveys the correct password (if password protection is enabled) that the user defined at block 156.

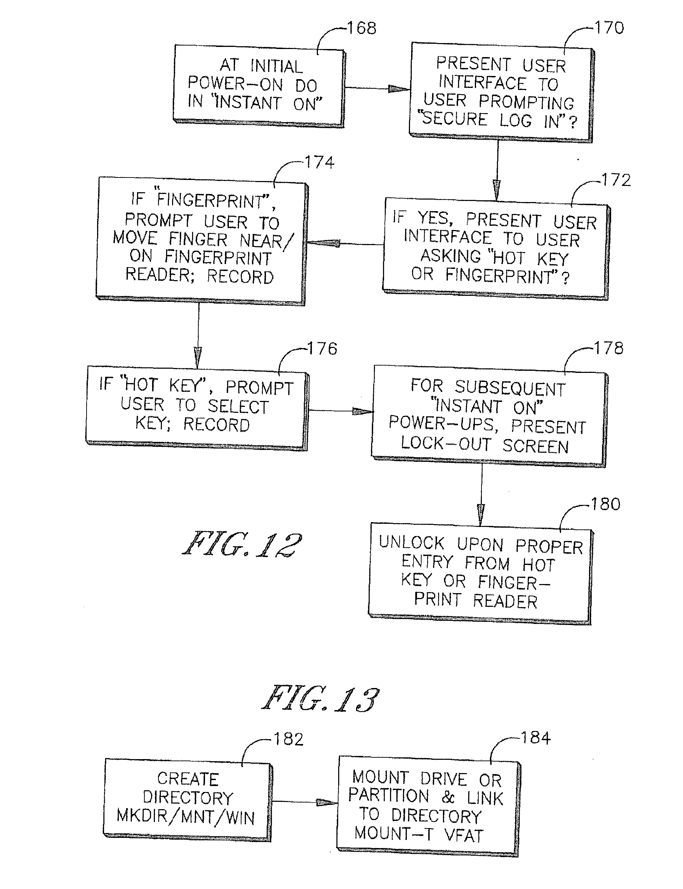

Figure 12 illustrates the logic for allowing a user to determine whether to lock users out at power-on in the "instant on" mode until such time as a user-defined test is satisfied. Commencing at block 168, the first time the user powers up in instant on mode, the logic flows to block 170 to present a UI prompting the user to enter whether he wishes for secure instant-on logins to be imposed. If the user decides to implement secure login, at block 172 a UI is presented asking the user to select what test is to be conducted for each subsequent login in the instant on mode. In one embodiment, the user may select a hot key or a proper fingerprint input and an unlock signal.

If the user selects fingerprint, at block 174 the processor prompts the user to move his finger next to or onto the FPR 32 shown in Figure 1. The fingerprint signal from the FPR 32 is recorded. On the other hand, if the user selected "hot key" at block 172, then at block 176 the user is prompted to depress the key (or keys) the user wishes to designate as the hot key. The user's input is recorded.

Block 178 indicates that for subsequent instant-on power-ups, assuming the user has selected secure login at block 170, a lock out screen is presented on the display 14 which prompts the user to enter the appropriate unlock signal. Until a correct unlock signal is received, no further access or use of the computer 10 in the instant on configuration is permitted; only the lock out screen is shown. Assuming the user enters the correct lockout signal at block 180, the signal is received and then access to the computer is enabled in the instant on mode by, e.g., presenting the UI 40 shown in Figure 2 on the display 14.

Figure 13 shows example non-limiting logic for enabling access to the disk drive ("C" drive) 26 in the instant on mode. At block 182 a directory is created of the form MKDIR/MNT/WIN, indicating that it is a directory associated with the "C" drive. Then at block 184, as part of booting the instant on O.S. for example, the drive or partition is mounted and linked to the director created at block 182 using a command of the form MOUNT -T VFAT/DEV/HDA1/MNT/WIN. Thus, the instant on O.S. perceives the "C" drive as a folder into which the drive logically is mounted, enabling the O.S. to access files on the "C" drive during operation.

While the particular SYSTEM AND METHOD FOR FAST BOOT OF COMPUTER is herein shown and described in detail, it is to be understood that the subject matter which is encompassed by the present invention is limited only by the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Further aspects and features of the present invention are set out in the following numbered clauses.

### CLAUSES

1. Computer, comprising:
   housing holding a processor and a computer display controlled by the processor;
   disk drive in the housing;
   solid state memory in the housing, wherein
   the processor presents a user interface (UI) on the display presenting a line of icons representing categories, and further wherein the processor determines a number of times a user selects each category within a count period and orders the icons in the line according to the number of times a user has selected the corresponding categories, such that icons representing more frequently selected categories are nearer to one end of the line than icons representing less frequently selected categories.
2. The computer of Clause 1, wherein responsive to receiving a one-click file sharing signal, the processor presents a UI on the display configured to receive a user-input folder name, password option, password, and access options, the processor loading the folder name, password option, password, and access options into a user-defined function (UDF), the processor executing the UDF upon subsequent receptions of the one-click file sharing signal such that the user can share files with another computer using one and only input action.
3. The computer of Clause 1, further comprising:
   at least first and second power on selector elements on the housing to energize the computer, wherein responsive to a signal from the first selector element the processor boots a main operating system (O.S.) from the disk drive into the memory and responsive to a signal from the second selector element the processor boots a second O.S. having a faster boot time than the main O.S., wherein the processor executing the second O.S. can access the disk drive.
4. Computer, comprising:
   housing holding a processor and a computer display controlled by the processor;
   disk drive in the housing;
   solid state memory in the housing, wherein responsive to receiving a one-click file sharing signal, the processor presents a UI on the display configured to receive a user-input folder name, password option, password, and access options, the processor loading the folder name, password option, password, and access options into a user-defined function (UDF), the processor executing the UDF upon subsequent receptions of the one-click file sharing signal such that the user can share files with another computer using one and only input action.
5. The computer of Clause 4, further comprising:
   at least first and second power on selector elements on the housing to energize the computer, wherein responsive to a signal from the first selector element the processor boots a main operating system (O.S.) from the disk drive into the memory and responsive to a signal from the second selector element the processor boots a second O.S. having a faster boot time than the main O.S., wherein the processor executing the second O.S. can access the disk drive.
6. The computer of Clause 4, wherein the processor presents a user interface (UI) on the display presenting a line of icons representing categories, and further wherein the processor determines a number of times a user selects each category within a count period and orders the icons in the line according to the number of times a user has selected the corresponding categories, such that icons representing more frequently selected categories are nearer to one end of the line than icons representing less frequently selected categories.

## Claims

1. Computer, comprising:
housing holding a processor and a computer display controlled by the processor;
disk drive in the housing;
solid state memory in the housing;
at least first and second power on selector elements on the housing to energize the computer, wherein responsive to a signal from the first selector element the processor boots a main operating system (O.S.) from the disk drive into the memory and responsive to a signal from the second selector element the processor boots a second O.S. having a faster boot time than the main O.S.; wherein
the processor executing the second O.S. can access the disk drive, and further wherein the processor presents a user interface (UI) on the display presenting a line of icons representing categories, the line including a home icon, the processor enabling a user to select an image and responsive thereto the processor presenting the image as the home icon to thereby establish the appearance of the home icon, the processor determining a number of times a user selects each category within a count period and ordering the icons in the line according to the number of times a user has selected the corresponding categories, the processor also establishing file sharing with another computer responsive to one and only one input action indicating a desire to share files, the processor also providing secure login responsive to a user selection thereof.

2. The computer of Claim 1, wherein the categories include wireless, social networking, settings, configurable applications, gaming, and media gallery.

3. The computer of Claim 2, wherein the wireless category can be selected to enable a user to configure wireless local area network (WLAN) settings, wireless wide area network (WWAN) settings, and short range rf communication settings.

4. The computer of Claim 2, wherein the social networking category can be entered to launch an email application, a short message service application, and a social networking website application.

5. The computer of Claim 2, wherein the settings category can be entered to allow a user to enter date and time and to define at least a human language in which information is presented on the display.

6. The computer of Claim 2, wherein the configurable application category can be entered to allow a user to enter a weather website, a stock quote website, a calendar function, and to define and invoke a one-click file sharing user-defined function (UDF).

7. The computer of Claim 2, wherein the gaming category can be entered to allow a user to select to launch a web-based gaming application and a network gaming application.

8. The computer of Claim 2, wherein the media gallery category can be selected to cause photographic galleries to be accessible to the user.

9. The computer of Claim 1, wherein the image for the home icon is established at least in part by receiving a user selection of "stored image" or "camera", and responsive to "stored image" being selected, the processor presents a list of stored images one of which is selectable by the user to establish the home icon, and responsive to "camera" being selected the processor obtains a current image from a camera on the computer and uses the image from the camera to establish the home icon.

10. The computer of Claim 1, wherein the processor is enabled to access the disk drive while executing the second O.S. by mounting the disk drive or a partition thereof during boot and linking the disk drive or partition to a predefined directory accessed by the processor executing the second O.S.

11. The computer of Claim 1, wherein the processor presents a UI upon first time power on using the second selector element prompting a user to select whether to invoke secure login, and responsive to a user input indicating desire to invoke secure login, the processor prompts the user to select an unlock signal, the computer preventing use of the computer upon subsequent power-ons using the second selector element until the unlock signal is received.

12. The computer of Claim 11, wherein the user can select a hot key or a fingerprint reader (FPR) signal as the unlock signal.

13. The computer of Claim 1, wherein responsive to receiving a one-click file sharing signal, the processor presents a UI on the display configured to receive a user-input folder name, password option, password, and access options, the processor loading the folder name, password option, password, and access options into a user-defined function (UDF), the processor executing the UDF upon subsequent receptions of the one-click file sharing signal such that the user can share files with another computer using one and only input action.

14. The computer of Claim 1, wherein the processor determines a number of times a user selects each category within a count period and orders the icons in a row or column according to the number of times a user has selected the corresponding categories, such that icons representing more frequently selected categories are nearer to one end of the row or column than icons representing less frequently selected categories.

15. Computer, comprising:
housing holding a processor and a computer display controlled by the processor;
disk drive in the housing;
solid state memory in the housing, wherein
the processor presents a user interface (UI) on the display presenting a line of icons representing categories, and further wherein the processor determines a number of times a user selects each category within a count period and orders the icons in the line according to the number of times a user has selected the corresponding categories, such that icons representing more frequently selected categories are nearer to one end of the line than icons representing less frequently selected categories.
